# EUROPÄISCHE PATENTSCHRIFT

(11) **EP 1 038 915 B1**
(45) Veröffentlichungstag und Bekanntmachung des Hinweises auf die Patenterteilung: **03.12.2003**
(21) Anmeldenummer: 99105746.4
(22) Anmeldetag: 22.03.1999
(51) Int. Cl.: C08K 13/02, C09D 131/04, C09D 5/18, B32B 5/24

(54) **Bor, Phosphor und Polymer enthaltende flammhemmende Zusammensetzungen**
Flame retardant compositions containing boron, phosphorus and polymer
Compositions retardatrices au feu contenant de bore, phosphore et polymère

(43) Veröffentlichungstag der Anmeldung: 27.09.2000
(73) Patentinhaber: Ciba Spezialitätenchemie Pfersee GmbH, 86462 Langweid a.L. (DE)
(72) Erfinder: Dermeik, Salman, Dr., 86157 Augsburg (DE); Braun, Reinhold, 86830 Leuthau (DE); Lemmer, Karl-Heinz, 86156 Augsburg (DE)

(56) Entgegenhaltungen:
- EP-A- 0 317 849
- EP-A- 0 395 900
- EP-A- 0 808 956
- EP-A- 0 855 462
- WO-A-97/17410
- PATENT ABSTRACTS OF JAPAN vol. 095, no. 009, 31. Oktober 1995 (1995-10-31) & JP 07 149965 A (SUMITOMO BAKELITE CO LTD), 13. Juni 1995 (1995-06-13) -& DATABASE WPI Week 9532 Derwent Publications Ltd., London, GB; AN 95-243733 XP002115239

## Beschreibung

Die Erfindung betrifft Zusammensetzungen, welche mindestens je einen Vertreter bestimmter Borverbindungen, bestimmter Phosphorverbindungen und bestimmter Polymerer enthalten. Sie betrifft ferner ein Verfahren zur Herstellung solcher Zusammensetzungen und deren Verwendung zur Applikation auf Substrate, denen hierdurch flammhemmende Eigenschaften verliehen werden.

Die US-A 3 934 066 beschreibt Laminate, welche verschiedenen Materialien/Substraten flammhemmende Eigenschaften verleihen. Diese Laminate enthalten eine Schicht aus porösem Material, das mit einer wasserlöslichen intümeszenten Zusammensetzung imprägniert ist. Die Zusammensetzung kann wasserlösliche anorganische Phosphate und zusätzlich Borsäure enthalten und muß in die Poren des Trägermaterials eindringen. Von der Verwendung wasserunlöslicher Polymerer in der Zusammensetzung wird abgeraten. Wasserunlösliche organische Phosphorsäureester werden ebenfalls nicht erwähnt. Um das Auswaschen der wasserlöslichen Imprägnierung bei Kontakt mit Wasser zu verhindern, müssen die Laminate eine Schutzschicht aufweisen. Für ihre Verbindung mit dem Substrat, dem flammhemmende Eigenschaften verliehen werden sollen, wird ein Klebstoff verwendet.

G. Camino und L. Costa beschreiben in "Polymer Degradation and Stability 20 (1988) Seite 271 - 294 Zusammensetzungen, welche Substraten flammhemmende Eigenschaften verleihen. Diese Zusammensetzungen werden z.B. als Additive in Polymere eingebracht (Seite 272). Eine reine Oberflächenbehandlung bzw. Beschichtung von flächenhaften Substraten mittels flammhemmender Zusammensetzungen wird nicht beschrieben. Es handelt sich bei den Zusammensetzungen dieser Schrift um intumeszente Produkte, welche mehrwertige Alkohole und Amine/Amide sowie anorganische Säuren oder Vorstufen davon enthalten. Zu letzterem sind unter anderen Borsäure oder Phosphorsäureester als Beispiele genannt (Seite 286), jedoch werden keine Zusammensetzungen erwähnt, welche Borsäure und Phosphorsäureester enthalten.

Aus der EP 520 186 A1 geht hervor, daß Polycarbonaten flammhemmende Eigenschaften verliehen werden, wenn man sie mit einer Phosphorverbindung, einer Borverbindung und entweder einem Polysiloxan oder einem fluorhaltigen Polymeren vermischt. Die Mischungen aus Polycarbonat und den übrigen Bestandteilen werden durch Schmelzkneten und Extrudieren hergestellt. Eine Kombination aus Phosphorverbindung, Borsäure und einer wäßrigen Polycarbonatdispersion wird in dieser Schrift nicht erwähnt. Die dort beschriebenen Polycarbonate mit flammhemmenden Eigenschaften eignen sich nicht oder nur schlecht zur Oberflächenbehandlung anderer Substrate und zwar wegen der nicht optimalen mechanischen Eigenschaften der Polycarbonate, wodurch eine Applikation (z.B. mittels Beschichtung) einer Polycarbonatmischung auf ein flächenartiges Substrat sehr erschwert ist.

Die DE-A 24 01 954 beschreibt halogenierte Polymere, denen ein Phosphorsäureester als Weichmacher zugesetzt ist. Phosphorsäureester können jedoch in den Mengen, die zur Erzielung ausreichender flammhemmender Wirkung in den Polymeren erforderlich sind, nach den Aussagen dieser Schrift zu unerwünschter Klebrigkeit führen. Daher wird außerdem noch eine Bor- oder Siliciumverbindung zugesetzt. Deren Funktion ist also Reduzierung der Klebrigkeit. Das erforderliche Niveau an flammhemmender Wirkung wird nach der Lehre dieser Schrift primär über die Menge an Phosphat erreicht. Zwar ist angegeben, daß ein Zusatz von Calciumborat zur flammhemmenden Wirkung beiträgt, für Alkalimetallborate, Ammoniumborate oder Borsäure geht dieser Effekt jedoch nicht aus dieser Schrift hervor. Aus dem Dokument ist nicht abzuleiten, daß eine Kombination von Phosphorsäureester, Borsäure, Ammoniumborat oder Alkalimetallborat und einem nicht-halogenierten Polymeren geeignet sein kann, einem Substrat flammhemmende Eigenschaften zu verleihen. Hinzu kommt, daß halogenierte Polymere wie Polyvinylchlorid bereits selbst bessere flammhemmende Eigenschaften (höhere Oxygen Index-Werte) aufweisen als eine Reihe nicht-halogenierter Polymerer, so daß die Anforderungen, die an Zusätze bezüglich deren flammhemmender Wirkung zu stellen sind, niedriger sind als im Fall anderer Polymerer. Überdies weisen Mischungen, die PVC oder andere halogenierte Polymere enthalten, den Nachteil auf, daß im Fall hoher Temperaturen aus den Halogenverbindungen schädliche toxische Gase gebildet werden können.

Aufgabe der vorliegenden Erfindung war es, Zusammensetzungen zur Verfügung zu stellen, welche auf unterschiedliche Substrate aufgebracht werden können und diesen Substraten flammhemmende Eigenschaften verleihen, ohne daß diese Zusammensetzungen bei hohen Temperaturen schädliche toxische halogenhaltige Gase entwickeln. Femer war es Aufgabe der Erfindung, ein Verfahren zur Herstellung solcher Zusammensetzungen und Möglichkeiten zu deren Verwendung zur Verfügung zu stellen.

Die Aufgabe wurde gelöst durch eine halogenfreie Zusammensetzung, welche mindestens folgende Komponenten enthält:
a) Borsäure oder ein Alkalimetallborat oder ein Ammoniumborat,
b) einen wasserunlöslichen Triester der Phosphorsäure und
c) eine wäßrige Dispersion eines wasserunlöslichen Polymeren,
ferner durch ein Verfahren zur Herstellung einer solchen Zusammensetzung, das dadurch gekennzeichnet ist, daß man zu einer wäßrigen Dispersion eines wasserunlöslichen Polymeren (Komponente c)) Borsäure oder ein Alkalimetallborat oder ein Ammoniumborat (Komponente a)) hinzufügt, die erhaltene Mischung homogenisiert, anschließend einen wasserunlöslichen Triester der Phosphorsäure (Komponente b)) und ggf. ein Antischaummittel (Komponente d)) und/oder ein Verdickungsmittel (Komponente e)) zugibt und die erhaltene Zusammensetzung homogenisiert sowie durch die Verwendung solcher Zusammensetzungen zur Applikation auf ein flächenförmiges Substrat.

Bevorzugte Ausführungsformen der Zusammensetzungen und deren Verwendung gehen aus Unteransprüchen hervor.

Die erfindungsgemäßen Zusammensetzungen sind sehr gut dazu geeignet, auf flächenförmige Substrate appliziert zu werden und verleihen den hierbei entstehenden Produkten gute flammhemmende Eigenschaften. Auch in Fällen, wo diese Substrate als solche keine oder nur wenig ausgeprägte flammhemmende Eigenschaften besitzen (niedrige Ol, d.h. Oxygen-Index-Werte), gelingt es, durch Aufbringen einer erfindungsgemäßen Zusammensetzung in der erforderlichen Menge, Produkte zu erhalten, die nicht oder wesentlich schlechter brennen als das Substrat als solches.

Erfindungsgemäße Zusammensetzungen besitzen folgende Vorteile:
1. Wegen der Verwendung wasserunlöslicher Phosphatester (Komponente b)) und wasserunlöslicher Polymerer (Bestandteil von Komponente c)) sind sie nach Trocknung wässerungsbeständig. Das heißt, daß trotz des Gehalts an wasserlöslicher Borverbindung nach Trocknung die Zusammensetzung durch Wasser nicht oder nur wenig auswaschbar ist und die mit der Zusammensetzung behandelten Substrate auch nach Kontakt mit Wasser ihre flammhemmenden Eigenschaften im wesentlichen beibehalten. Die Tatsache, daß auch die an und für sich lösliche Borverbindung nach Trocknung nicht mehr oder nur zu einem geringen Anteil auswaschbar ist, ist besonders überraschend. Eine mögliche Erklärung besteht darin, daß der wasserunlösliche Phosphorsäuretriester und das wasserunlösliche Polymer die Borverbindung vor dem Wasser schützt. Somit lassen sich erfindungsgemäße Zusammensetzungen vorteilhaft auch für Artikel einsetzen, bei denen Beständigkeit gegen Wasser gefordert wird.
2. Durch Variation der Menge und Art der Komponenten, insbesondere des Verhältnisses von Borverbindung zu Phosphorsäuretriester, kann die Klebrigkeit der Oberfläche der Zusammensetzung gezielt beeinflußt werden. Hierdurch ist es vielfach möglich, die Zusammensetzung mit einem flächenhaften Substrat ohne die zusätzliche Verwendung eines Klebstoffs zu verbinden, ggf. durch Anwendung erhöhter Temperatur und/oder erhöhten Drucks.
3. Sie enthalten keine Halogene, die im Brandfall toxische Gase freisetzen können.
4. Eine Reihe erfindungsgemäßer Zusammensetzungen sind preiswert herzustellen.
5. Sie eignen sich zur Applikation auf unterschiedlichste Substrate, darunter auch solche, welche niedrige Ol-Werte aufweisen, also leicht brennbar sind, wie z.B. Polyolefine, Polyester, Baumwolle.
6. Sie erlauben die Herstellung von "Sandwich"-Strukturen, in denen die erfindungsgemäße Zusammensetzung als Zwischenschicht zwischen einem ersten und einem zweiten Substrat vorliegt und der ganzen Struktur flammhemmende Eigenschaften verleiht, selbst wenn die beiden Substrate als solche diese Eigenschaften nicht besitzen.

Eine erfindungsgemäße Zusammensetzung enthält mindestens eine Komponente a), eine Komponente b), und eine Komponente c), der erwähnten und unten näher beschriebenen Art. Sie kann jedoch noch weitere Komponenten enthalten. Anstelle nur einer Komponente a) und nur einer Komponente b) kann sie auch mehrere Verbindungen enthalten, welche unter die Definition von Komponente a) bzw. b) fallen, z.B. Isomerengemische. In analoger Weise kann die wäßrige Dispersion c) zusätzlich zu einem wasserunlöslichen Polymeren noch weitere Polymere enthalten. Diese zusätzlichen Polymeren sind vorzugsweise auch wasserunlöslich. Im Einzelfall jedoch kann auch ein wasserlösliches Polymer mitverwendet werden, jedoch sollte seine Menge geringer sein als die des oder der wasserunlöslichen Polymeren.

Komponente a) der erfindungsgemäßen Zusammensetzungen ist entweder Borsäure oder ein Alkalimetallborat oder ein Ammoniumborat. Aus Preisgründen sind unter den Alkalimetallboraten Borate des Natriums oder Kaliums bevorzugt. Als Alkalimetall- und Ammoniumborate sind nicht nur Salze mit einem einzigen Boratom geeignet, sondern auch die aus der chemischen Literatur bekannten höherkondensierten Borate mit mehreren Boratomen, die auch in Form ihrer Hydrate vorliegen können. Beispiele sind Borax sowie Alkalimetall- oder Ammoniumtetraborate und -pentaborate bzw. Hydrate dieser Salze. Als Komponente a) geeignete Borverbindungen sind im Handel erhältlich.

Komponente b) ist ein wasserunlöslicher Triester der Phosphorsäure. Unter "wasserunlöslich" werden hierbei Ester verstanden, welche folgende Bedingung erfüllen: Eine Mischung aus dem betreffenden Triester und Wasser darf bei Raumtemperatur nicht mehr als 5 % Triester in gelöster Form (bezogen auf Gesamtmenge an wäßriger Phase) enthalten. Die gleiche Bedingung gilt für die Definition "wasserunlöslich" bei den Polymeren von Komponente c), d.h. nicht mehr als 5 Gew% Polymer dürfen in Wasser (ohne Tensidzusatz) löslich sein.

Als Komponente b) geeignet sind Triester der Formel (RO)₃ P=O, in denen alle drei Reste R verschieden voneinander oder in denen 2 oder 3 dieser Reste gleich sind. Es können Trialkylester, Aryldialkylester, Alkyldiarylester oder Triarylester verwendet werden. Besonders geeignet als Komponente b) sind hydrolysestabile Triester mit geringer Flüchtigkeit. Bevorzugt werden Triester, in denen alle drei Reste R aromatische Reste sind, also Verbindungen der Formel (RO)₃ P=O, worin alle Reste R unabhängig voneinander für einen unsubstituierten Phenylrest stehen oder für einen Phenylrest, der durch eine oder mehrere Hydroxygruppen oder Alkylgruppen mit 1 bis 4 Kohlenstoffatomen substituiert ist. Es haben sich außerdem Triester (RO)₃ P=O als geeignet erwiesen, bei denen zwei der drei Reste R zusammen eine Kohlenstoffbrücke bilden, die sich also durch Veresterung zweiwertiger Alkohole oder Phenole erhalten lassen, so daß beide dieser OH-Gruppen mit dem gleichen Phosphoratom verestert sind. Ein Beispiel ist die Verbindung

(C₆ H₅ O)₂ P(O)-O-m-C₆ H₄-O-P(O) (O C₆ H₅)₂

die sich durch Veresterung von Resorcin mit 2 Molekülen Phosphorsäurediphenylester ableitet. Auch Phosphorsäurediphenylalkylester, wobei die Alkylgruppe 1 bis 4 Kohlenstoffatome enthält, können verwendet werden.

Es ist von Vorteil, wenn der als Komponente b) verwendete Phosphorsäureester einen Schmelzpunkt von weniger als 100°C, vorzugsweise sogar von weniger als 70°C besitzt. Besonders gut geeignet sind Triester, die bei Raumtemperatur flüssig, jedoch wenig flüchtig, sind. Ein niedriger Schmelzpunkt begünstigt die Herstellung und Weiterverarbeitung erfindungsgemäßer Zusammensetzungen.
Geeignete Phosphorsäuretriester sind im Handel erhältlich, die gleichzeitige Anwesenheit von Isomeren in diesen Handelsprodukten stört nicht.

Die als Bindemittel fungierende Komponente c) ist eine wäßrige Dispersion eines wasserunlöslichen Polymeren. Zur Definition von "wasserunlöslich" siehe oben. Als Komponente c) können wäßrige Dispersionen verwendet werden, die mindestens ein wasserunlösliches Polymer enthalten. Sie können daneben auch noch ein oder mehrere weitere Polymere unterschiedlicher chemischer Struktur enthalten. Vorzugsweise sind auch diese zusätzlichen Polymeren wasserunlöslich. Das wasserunlösliche Polymer, das Komponente c) mindestens enthalten muß, kann von beliebiger chemischer Natur sein, sofern es nur wasserunlöslich gemäß oben angeführter Definition ist. Als Nebenprodukte anwesende Monomere und Oligomere stören im allgemeinen nicht, ihr Anteil sollte jedoch nicht höher als 5 Gew.% , bezogen auf das Polymer, sein. Das wasserunlösliche Polymer sollte ein mittleres Molekulargewicht von mindestens 500, vorzugsweise ein mittleres Molekulargewicht im Bereich von etwa 1000 bis 50000 aufweisen.

Gut geeignet als Komponente c) der erfindungsgemäßen Zusammensetzungen sind wäßrige Dispersionen, welche ein wasserunlösliches Polymer enthalten, das ein Homo- oder Copolymer ist, welches sich aus einem oder mehreren der folgenden Monomeren aufbaut: Vinylacetat, Ethylen, Propylen, N-Methylolacrylamid, N -Methylolmethacrylamid, Acrylsäure, Methacrylsäure, Alkalimetallacrylat, Alkalimetallmethacrylat, Alkylester der Acrylsäure oder der Methacrylsäure mit 1 bis 4 Kohlenstoffatomen im Alkylrest. Auch Polyurethane und Polyesterurethane sind gut geeignet .
Wäßrige Dispersionen der genannten Polymeren sind handelsübliche Produkte.

Reine Polyolefine, also z.B. Homopolymere oder Copolymere, die ausschließlich aus Ethylen und/oder Propylen aufgebaut sind, sind zwar auch geeignet, aber weniger bevorzugt. Gut geeignet sind dagegen Copolymere, welche zwar Ethylen- und/oder Propylen-Einheiten enthalten, daneben aber auch noch eine oder mehrere andere Monomereinheiten.

Besonders gut geeignet als Polymere in Komponente c) sind Copolymere aus Vinylacetat und Ethylen sowie Copolymere aus N -Methylolacrylamid und Ethylacrylat.

Die als Komponente c) verwendeten Dispersionen enthalten neben Wasser und mindestens einem wasserunlöslichen Polymer noch ein oder mehrere Tenside, welche die Stabilität der Dispersion gewährleisten. Hierbei können beispielsweise nichtionogene Tenside verwendet werden. Die Herstellung der wäßrigen Dispersion kann nach üblichen, dem Fachmann geläufigen Methoden erfolgen. Bevorzugt als Komponente c) sind Dispersionen, welche 30 bis 70 Gew.% Wasser, 1 bis 5 Gew.% Tensid oder Tensidgemisch und 25 bis 65 Gew.% Polymer oder Polymergemisch enthalten.

Besonders gut für die Applikation auf flächenförmige Substrate, um diesen flammhemmende Eigenschaften zu verleihen, eignen sich erfindungsgemäße Zusammensetzungen, in denen das Gewichtsverhältnis des in Komponente a) enthaltenen Bors zu dem in Komponente b) enthaltenen Phosphor (jeweils als Element B bzw. P berechnet) 1 : 0,05 bis 1 : 0,1 beträgt.

Außer den unbedingt nötigen Komponenten a), b) und c) können erfindungsgemäße Zusammensetzungen noch weitere Bestandteile enthalten. So ist es in vielen Fällen von Vorteil, wenn noch ein Antischaummittel als Komponente d) und/oder ein Verdickungsmittel als Komponente e) enthalten ist. Ein Antischaummittel kann zweckmäßig sein, um zu starkes Schäumen bei Herstellung oder Anwendung der Zusammensetzung zu unterbinden. Ein Verdikkungsmittel wird vorteilhaft angewandt, um die Konsistenz bzw. Viskosität der Zusammensetzung im Hinblick auf die vorgesehene Verwendung zu steuern. An Stelle eines einzigen Antischaummittels bzw. Verdickungsmittels können Komponente d) bzw. e) auch Gemische solcher Produkte enthalten. Geeignete Antischaummittel und Verdickungsmittel sind auf dem Markt erhältlich.
Als Antischaummittel können bekannte, siliciumhaltige oder siliciumfreie Produkte verwendet werden. Bevorzugt werden siliciumfreie Antischaummittel, denn es ist von Vorteil, wenn erfindungsgemäße Zusammensetzungen keine Siliciumverbindungen, insbesondere keine Polysiloxane enthalten. Es hat sich nämlich gezeigt, daß in einigen Fällen die Anwesenheit von Polysiloxanen sich negativ auf die flammhemmenden Effekte auswirkt, welche mit den erfindungsgemäßen Zusammensetzungen erzielt werden sollen. Falls dennoch Siliciumverbindungen als Antischaummittel eingesetzt werden sollen, empfiehlt es sich, deren Menge so gering wie möglich zu halten.
Geeignete Verdickungsmittel finden sich in der Reihe der Carboxymethylcellulosen. Welches Verdickungsmittel für das jeweilige System am besten geeignet ist, hängt u.a. vom geforderten pH-Wert ab.

Vorzugsweise enthalten erfindungsgemäße Zusammensetzungen keine weiteren Bestandteile als die Komponenten a), b), c) und ggf. d) und/oder e), d.h. die Summe der Gewichtsprozente an Komponenten a) bis e) beträgt vorzugsweise 100 %, wobei allerdings, wie bereits erwähnt, eine oder mehrere der Komponenten a) bis e) auch Gemische von Produkten sein können, welche unter die für die jeweilige Komponente angegebene Definition fallen , wobei allerdings Komponente c) zusätzlich wasserlösliche Polymere enthalten kann).

Vorzugsweise enthalten erfindungsgemäße Zusammensetzungen die Komponenten a) bis e) in folgenden Mengen:
25 bis 50 Gew.% Komponente a)
10 bis 40 Gew.% Komponente b)
20 bis 50 Gew.% Komponente c)
0 bis 5 Gew.% Komponente d)
0 bis 5 Gew. % Komponente e)

Erfindungsgemäße Zusammensetzungen besitzen vorzugsweise die Konsistenz einer hochviskosen Flüssigkeit oder einer Paste. In dieser Form eignen sie sich sehr gut für die Applikation auf verschiedenartige flächenhafte Substrate, z.B. mittels eines Beschichtungsverfahrens. Die Konsistenz oder Viskosität kann bequem nach der einen oder anderen Richtung durch Zugabe von Wasser oder von Verdickungsmittel variiert werden. Die Klebrigkeit, welche die Haftung auf einem Substrat beeinflußt, läßt sich steuern über Art und Menge der einzelnen Komponenten, insbesondere über das Verhältnis von Komponente a) zu Komponente b).

Erfindungsgemäße Zusammensetzungen lassen sich vorteilhaft herstellen, indem man zu einer wäßrigen Dispersion eines wasserunlöslichen Polymeren die benötigte Menge Borverbindung (Komponente a) hinzufügt, das erhaltene Gemisch homogenisiert, anschließend die benötigte Menge Triester der Phosphorsäure (Komponente b) zugibt und wieder homogenisiert. Soll eine Komponente d) und/oder e) zusätzlich verwendet werden, so kann diese zu einem beliebigen Zeitpunkt der Polymerdispersion bzw. der dann vorliegenden Mischung zugefügt werden. Zweckmäßigerweise wird sie nach Zugabe der Komponente b) hinzugefügt und anschließend wird die Zusammensetzung homogenisiert. Die Zugabe der einzelnen Komponenten und die Homogenisierung können bei Raumtemperatur oder leicht erhöhter Temperatur erfolgen, für die Homogenisierung genügt im Normalfall ein einfacher Mischvorgang, z.B. mittels eines mechanischen Rührers.
An Stelle des oben beschriebenen Verfahrens kann die Herstellung einer erfindungsgemäßen Zusammensetzung auch erfolgen, indem man Komponente a) (Borverbindung) und Komponente b) (Phosphorsäureester) und ggf. Komponente d) und/ oder e) gleichzeitig der Polymerdispersion (Komponente c) zufügt. Dies ist jedoch weniger bevorzugt.

Es ist vorteilhaft, wenn die Komponente a) in möglichst feinteiliger Form für das Herstellungsverfahren eingesetzt wird. Dies gilt insbesondere dann, wenn als Komponente a) Borsäure verwendet wird. Es hat sich gezeigt, daß dadurch die Eigenschaften erfindungsgemäßer Zusammensetzungen bzw. die Eigenschaften von mit diesen Zusammensetzungen behandelten Substraten verbessert werden können. Die feinteilige Form von Komponente a) läßt sich bequem durch mechanisches Zerkleinern größerer Teilchen von Komponente a) erhalten.

Erfindungsgemäße Zusammensetzungen eignen sich ausgezeichnet zur Applikation auf flächenförmige Substrate, um den dadurch entstandenen Produkten flammhemmende Eigenschaften zu verleihen. Hierzu wird eine solche Zusammensetzung auf ein flächenförmiges erstes Substrat aufgebracht. Der Ausdruck "erstes Substrat" wird hier verwendet, weil es möglich ist, auf die diesem ersten Substrat abgewandte Oberfläche der Zusammensetzung ein zweites flächenförmiges Substrat aufzubringen, um so zu einer "Sandwich"-Struktur zu gelangen. In dieser Sandwich-Struktur bildet die aus der erfindungsgemäßen Zusammensetzung stammende Schicht die mittlere Schicht.
Die Applikation der erfindungsgemäßen Zusammensetzung auf das erste Substrat kann beispielsweise durch einen sogenannten Pflatschprozeß mittels Walzen erfolgen. Besonders geeignet sind erfindungsgemäße Zusammensetzungen für eine Applikation mittels eines Beschichtungs- oder Rakelverfahrens.
Das Verbinden der Schicht aus erfindungsgemäßer Zusammensetzung mit dem ersten und/oder zweiten flächenförmigen Substrat kann, wenn gewünscht, mit Hilfe einer zusätzlichen Klebstoffschicht erfolgen. Vielfach jedoch ist die Verwendung eines Klebstoffs nicht erforderlich, sondern das Verbinden der Schichten kann direkt bei Raumtemperatur oder erhöhter Temperatur bei gleichzeitiger Anwendung eines erhöhten Drucks erfolgen. Weil, wie oben erwähnt, die Klebrigkeit erfindungsgemäßer Zusammensetzungen gezielt beeinflußt werden kann, ist es in vielen Fällen möglich, auf die zusätzliche Verwendung von Klebstoff zu verzichten. Ob im Einzelfall dennoch ein Klebstoff erforderlich werden kann, hängt von der Art und Oberfläche des Substrats und von der geforderten Haftfestigkeit ab.

Das erste und ggf. zweite flächenförmige Substrat, dem flammhemmende Eigenschaften verliehen werden sollen, kann von unterschiedlichster Art sein. Selbst bei Substraten mit hoher Brennbarkeit (niedrigem Oxygen-Index-Wert) haben sich erfindungsgemäße Zusammensetzungen gut bewährt. So kommen als Substrate Materialien aus Polyolefinen wie Polyethylen, Polypropylen oder aus Polyester, Polyamid, Polyurethan, Cellulose oder sonstigen Polymeren in Frage. Auch Copolymere aus mehreren der entsprechenden Monomeren sowie Mischungen der genannten Polymere sind als Substrate geeignet. Im Fall von Cellulosematerialien wie z.B. Baumwolle als Substrat empfiehlt es sich allerdings, als Komponente a) einer erfindungsgemäßen Zusammensetzung nicht Borsäure zu verwenden, sondern ein Alkalimetall- oder Ammoniumborat. Daß auch Substraten aus vollsynthetischen Materialien mittels Aufbringen erfindungsgemäßer Zusammensetzungen sehr gute flammhemmende Eigenschaften verliehen werden können, ist besonders überraschend.

Die flächenförmigen Materialien, die als erstes und/oder zweites Substrat dienen, können vielfältiger Natur sein. Besonders geeignet als Substrate sind Vliese (nonwovens) aus Fasermaterialien, flächenförmige Schäume z.B. aus Polyurethan, textile Flächengebilde wie vor allem Gewebe, Platten oder Folien. Im Fall von Geweben können diese aus einer einzigen Faserart oder aus Fasermischungen bestehen. Gut geeignet sind z.B. Gewebe aus einem Gemisch von Polyester und Baumwolle.

Die Applikation der erfindungsgemäßen Zusammensetzung auf das erste flächenförmige Substrat findet bevorzugt unter Verwendung einer solchen Menge der Zusammensetzung statt, daß die aus der Zusammensetzung stammende Schicht nach dem (unten beschriebenen) Trocknungsprozeß ein Flächengewicht von 160 bis 350 g/m² aufweist, insbesondere von 250 bis 300 g/m². Das Flächengewicht der aus der Zusammensetzung stammenden Schicht nach Trocknung läßt sich bequem als Differenz zwischen Flächengewicht des unbehandelten und des behandelten Substrats ermitteln. Die im Einzelfall am besten geeigneten Werte für Schichtdicke und Auflage der Zusammensetzung hängen von Art und Dicke des Substrats sowie vom gewünschten Niveau des flammhemmenden Effekts ab.

Nach der Applikation auf das erste Substrat und ggf. nach dem Aufbringen eines zweiten Substrats wird im Normalfall der erhaltene Schichtverbund getrocknet, um mindestens einen wesentlichen Anteil des aus Komponente c) stammenden Wassers zu entfernen. Die Trocknung kann bei 80 bis 130°C, vorzugsweise bei 100 bis 110°C , durchgeführt werden. In manchen Fällen kann es zweckmäßig sein, daran anschließend noch einen Kondensationsschritt bei noch höherer Temperatur durchzuführen, um eine chemische Vernetzung der Komponenten der erfindungsgemäßen Zusammensetzung mit sich selbst oder mit Substratmaterial zu bewirken. Nach dem Trocknungs- bzw. Kondensationsprozeß ist die Schicht, die aus der erfindungsgemäßen Zusammensetzung stammt, gut beständig gegen Wasser.

Schichtstrukturen, welche aus einem oder zwei Substraten und einer Schicht, die aus einer erfindungsgemäßen Zusammensetzung nach Trocknung resultiert, bestehen, eignen sich für vielfältige Einsatzzwecke. So können gemäß der Erfindung gute flammhemmende Effekte erzielt werden bei Platten und Folien für Baumaterialien, bei textilen Stoffen für Möbel- und Dekorationszwecke und für die Automobilindustrie, bei Folien, die als Zwischenschicht für Teppiche dienen, bei Vliesen und Schaumstoffen für Baumaterialien, bei Planen für Zelte und LKW s usw.

Die Erfindung wird nunmehr durch Ausführungsbeispiele veranschaulicht:

### Beispiel 1

Als Komponente c) diente eine handelsübliche Polymerdispersion (Vinnapas EN 428 der Firma Wacker, Copolymer auf Basis Vinylacetat und Ethylen, N-Methylolgruppen enthaltend) mit etwa 50 % Polymer- und etwa 50 % Wasseranteil. Zu dieser Polymerdispersion wurde bei Raumtemperatur unter Rühren feinteilige kristalline Borsäure gegeben. Anschließend wurde ein Phosphorsäuretriester hinzugefügt und die erhaltene Mischung durch Rühren bei Raumtemperatur homogenisiert. Es wurden hierbei unterschiedliche Typen von Phosphorsäureestem verwendet. Die so erhaltenen Zusammensetzungen wurden mittels eines Beschichtungsverfahrens auf unterschiedliche Substrate aufgebracht und die beschichteten Substrate bei 110°C/10 Minuten getrocknet.
Die hierbei verwendeten Mengen, Substrate und Phosphorsäureester sowie die Dicke der aufgebrachten Schicht vor Trocknung gehen aus der folgenden Tabelle 1 hervor.

**Tabelle 1**

| **Beispiel** | **Substrat Gewicht in g/m**^{**2**} | **Gewichtsanteile Borsäure** | **Art und Gewichtsanteile Phosphorsäureester** | **Gewichtsanteile Polymerdispersion** | **Schichtdicke (mm)** |
|---|---|---|---|---|---|
| 1a | PES, 188 | 2 | TXP, 1 | 2 | 0,5 |
| 1 b | PES, 188 | 2 | TCP, 1 | 2 | 0,5 |
| 1 c | PES, 188 | 2 | BTPP, 1 | 2 | 0,5 |
| 1 d, 1 e, 1 f | PES, 316 (Rest wie 1 a, 1 b, 1 c) | | | | |
| 1 g, 1 h, 1 i | PA, 216 (Rest wie 1 a, 1 b, 1 c) | | | | |
| 1 j, 1 k | PAN, 285 (Rest wie 1 a, 1 c) | | | | |
| 1 l, 1 m, 1 n | PU, 113 (Rest wie 1 a, 1 b, 1 c) | | | | |
| 1 o, 1 p, 1 q | CO/PES (50:50), 180 (Rest wie 1 a, 1 b, 1 c) | | | | |
| 1 r, 1 s, 1 t | CO/CV/PES (19:37:44), 327 (Rest wie 1 a, 1 b, 1 c) | | | | |
| CO = Baumwolle TXP = Trixylylphosphat PES = Polyester TCP = Tricresylphosphat PA = Polyamid BTPP = Triphenylphosphat, mit Butylresten am Phenylrest substituiert CV = Viskose PAN = Polyacrylnitril PU = Polyurethan | | | | | |

Alle in Tabelle 1 genannten Substrate mit Ausnahme von Polyurethan (PU) waren Gewebe. PU war ein flächenförmiger Schaumstoff.

Die so behandelten Substrate wurden einem Brenntest nach DIN 54336 bei 3 Sekunden Beflammzeit unterzogen. Bestimmt wurden Nachbrenndauer (ND) in Sekunden und Einbrennlänge (EL) in mm. Je niedriger diese beiden Werte, desto besser ist der flammhemmende Effekt. Tabelle 2 zeigt die Ergebnisse. Daraus ist zu erkennen. daß in der weitaus überwiegenden Anzahl der Versuche gute Ergebnisse bezüglich Flammschutz erhalten wurden.

**Tabelle 2**

| **Beispiel** | **ND (Sek.)** | **EL (mm)** |
|---|---|---|
| 1 a | 0 | 10 |
| 1 b | 1 | 5 |
| 1 c | 0 | 0 |
| 1 d | 5 | 1 |
| 1 e | 1 | 10 |
| 1 f | 5 | 5 |
| 1 g | 0 | 5 |
| 1 h | 0 | 5 |
| 1 i | 4 | 5 |
| 1 j | 1 | 5 |
| 1 k | 4 | 5 |
| 1 l | 19 | - |
| 1 m | 0 | - |
| 1 n | 0 | - |
| 1 o | 0 | 5 |
| 1 p | 1 | 10 |
| 1 q | 1 | 10 |
| 1 r | 0 | 5 |
| 1 s | 6 | 10 |
| 1 t | 0 | 5 |

### Beispiel 2

Dieses Beispiel zeigt die Ergebnisse, welche bei Verwendung von 2 oder 3 unterschiedlichen Phosphorsäureestem erhalten wurden.
Es wurde wie in Beispiel 1 gearbeitet, wobei in einigen Fällen ein 1:1- (Gewichtsverhältnis)-Gemisch von zwei Phosphorsäureestem bzw. ein 1:1:1-Gemisch von 3 Phosphorsäureestem verwendet wurde. Die verwendeten Substrate und Schichtdicken (vor Trocknung) der aufgebrachten Zusammensetzungen gehen aus Tabelle 3 hervor. Es wurde in allen Fällen mit einem Gewichtsverhältnis Borsäure : Phosphatester : Polymerdispersion von 2:1:2 gearbeitet. Im Fall der Verwendung von 2 oder 3 Phosphorsäureestem bedeutet die im oben genannten Verhältnis von 2:1:2 genannte Zahl 1, daß die Summe der Phosphorsäureester 1 Gewichtsteil betrug. Aus der nachfolgenden Tabelle 3 sind die Werte für Nachbrenndauer (ND) und Einbrennlänge (EL) nach Trocknung angegeben. Diese wurden bestimmt, wie in Beispiel 1 angegeben.

**Tabelle 3**

| **Beispiel** | **Substrat, Flächengewicht g/m**^{**2**} | **Phosphorsäureester** | **Schichtdicke (mm)** | **ND** | **EL** |
|---|---|---|---|---|---|
| 2 a | PES weiß, 188 | TCP | 0,25 | 0 | < 10 |
| 2 b | PES schwarz, 316 | TCP/TXP (1:1) | 0,25 | 0 | < 10 |
| 2 c | PA, 216 | TCP | 0,25 | 0 | < 10 |
| 2 d | PAC gelb, 253 | TCP | 0,25 | 0 | < 10 |
| 2 e | PAN, 285 | TXP | 0,25 | 8 | 10 |
| 2 f | CO/PES (50:50), 188 | BTPP | 0,25 | 2 | < 10 |
| 2 g | CV/PES (60:40), 291 | BTPP | 0,25 | 2 | < 10 |
| 2 h | CO/PES (35:65), 208 | TCP/TXP (1:1) | 0,25 | 1 | < 10 |
| 2 i | CO/CV/PES (19:37:44), 327 | TCP/TXP (1:1) | 0,25 | 0 | < 10 |
| 2 j | PU, 113 | TCP/TXP (1:1) | 0,25 | 0 | < 10 |
| 2 k | PP, 466 | BTPP | 0,25 | 0 | < 10 |
| 2 l | PES weiß, 188 | TCP/TXP/BTPP (1:1:1) | 0,5 | 0 | 5 |
| 2 m | PA, 216 | TCP/TXP/BTPP (1:1:1) | 0,5 | 0 | 5 |
| 2 n | PAC gelb, 253 | TCP/TXP/BTPP (1:1:1) | 0,5 | 0 | 5 |
| 2 o | PAN, 285 | TCP/TXP/BTPP (1:1:1) | 0,5 | 0 | 5 |
| 2 p | CO/PES (50:50), 188 | TCP/TXP/BTPP (1:1:1) | 0,5 | 0 | 5 |
| 2 q | CV/PES (60:40), 291 | TCP/TXP/BTPP (1:1:1) | 0,5 | 0 | 5 |
| 2 r | CO/PES (35:65), 208 | TCP/TXP/BTPP (1:1:1) | 0,5 | 1 | 5 |
| 2 s | CO/CV/PES (19:37:44), 327 | TCP/TXP/BTPP (1:1:1) | 0,5 | 0 | 5 |
| 2 t | PP, 466 | TCP/TXP/BTPP (1:1:1) | 0,5 | 0 | 5 |
| PAC = Polyacrylat PP = Polypropylen | | | | | |

Alle in Beispiel 2 verwendeten Substrate waren Gewebe mit Ausnahme von PU und PP (Beispiele 2 j, 2 k und 2 t). PP wurde als Folie und PU als flächenförmiger Schaumstoff eingesetzt.

In weiteren Versuchen wurde das Brennverhalten einer Polyethylenfolie untersucht, die mit erfindungsgemäßen Zusammensetzungen beschichtet und getrocknet worden war, wie in Beispiel 1 angegeben. Das Flächengewicht der unbeschichteten Folie betrug 99 g/m². Die verwendete Zusammensetzung enthielt 2 Gewichtsteile Borsäure, 2 Gewichtsteile der gleichen Polymerdispersion wie in Beispiel 1 und 1 Gewichtsteil Phosphorsäureester. Verwendet als Phosphorsäureester wurde in einem Fall TXP, im zweiten Fall TCP, im dritten Fall BTPP. Die Schichtdicke der Zusammensetzung betrug vor Trocknung 0,5 mm. Bei allen drei so hergestellten beschichteten Folien betrug die Nachbrenndauer 0 Sekunden.

### Beispiel 3

An Proben beschichteter Substrate, wie sie nach den Angaben der Beispiele 1 und 2 hergestellt worden waren (jedoch in einigen Fällen mit abweichender Schichtdicke) wurde ein verschärfter Test in Anlehnung an den Test B2 nach DIN 4102 durchgeführt. Hierzu wurden die Proben einer Beflammdauer von 15 Sekunden (statt 3 Sekunden wie in den Beispielen 1 und 2) ausgesetzt. Nach 20 Sekunden Brenndauer (= 15 sec. Beflammzeit + 5 sec. Nachbrennzeit) wurde die Einbrennlänge bestimmt. Der Test gilt als bestanden, wenn die Nachbrennflamme eine Meßmarke nicht erreicht, welche sich 15 cm vom Rand des Gewebes bzw. Substrats entfernt befindet. Als erfindungsgemäße Zusammensetzung wurde in Beispiel 3 ausschließlich eine Mischung aus 2 Gewichtsteilen Borsäure, 2 Gewichtsteilen Polymerdispersion (wie in Beispiel 1) und 1 Gewichtsteil eines 1:1 (Gewichtsverhältnis)-Gemisches aus TCP und TXP verwendet.

Die Ergebnisse gehen aus Tabelle 4 hervor. Dort bedeutet ein "+" in der Spalte "Ergebnis", daß der Test bestanden wurde, "-" bedeutet: Test nicht bestanden.

**Tabelle 4**

| **Stoff** | **m**^{**2**}**-Gewicht (g/m**^{**2**}**)** | **Schichtstärke (mm) 0,5** | **Schichtstärke (mm) 0,25** | **Schichtstärke (mm) 0,12** |
|---|---|---|---|---|
| PES, weiß | 187,6 | + | + | + |
| PES, schwarz | 316 | + | + | + |
| PA | 216,2 | + | + | + |
| PAC, gelb | 252,6 | + | + | + |
| PAN | 284,9 | + | + | - |
| CO/PES 50/50 | 188,2 | + | + | + |
| CV/PES 60/40 | 290,9 | + | + | + |
| CO/PES 35/65 | 207,7 | + | - | - |
| CO/CV/PES 19/37/44 | 326,8 | + | + | + |
| PU | 113,2 | + | + | + |
| PP | 465,9 | + | + | + |

### Beispiel 4

Dieses Beispiel zeigt die Ergebnisse von Brenntests an beschichteten Polyamid (PA)-Geweben bei Variation der Beschichtungsrezeptur. Die Schichtdicke der auf das Substrat aufgebrachten Zusammensetzung betrug vor Trocknung 0,5 mm. Die Brenntests wurden wie in Beispiel 1 nach DIN 54336 durchgeführt. Die Ergebnisse gehen aus Tabelle 5 hervor.

**Tabelle 5**

| **Beispiel:** | **Beschichtungsrezeptur** | | | **Gewichts- verhältnis a:b:c** | **ND** | **EL** |
|---|---|---|---|---|---|---|
| | **Komponente a)** | **Komponente b)** | **Komponente c)** | | | |
| 4a | BS | TCP | PUR | 2 : 1 : 6 | 1 | < 5 |
| 4b | BS | TCP | BAMA | 2 : 1 : 2 | 0 | 5 |
| 4c | BS | TCP | AA | 2 : 1 : 2 | 0 | < 5 |
| 4 d | AB | BTPP | EM | 2 : 1 : 1 | 0 | < 5 |
| 4 e | AB | TCP | wie Beispiel 1 | 2 : 1 : 2 | 0 | < 5 |
| 4 f | Borax | TCP | wie Beispiel 1 | 2 : 1 : 2 | 0 | < 10 |
| BS = Borsäure PUR = Polyurethan (50 %ige wäßrige Dispersion) BAMA = Copolymer aus Acrylester, Acrylnitril, Methylolacrylamid und Methylenbernsteinsäure (45 %ige wäßrige Dispersion) AA = Copolymer aus Acrylester und Acrylnitril (50 %ige wäßrige Dispersion) AB = Ammoniumborat: (NH₄)₂ B₁₀ O₁₆ · 8 H₂O EM = Copolymer aus Ethylacrylat und N-Methylolacrylamid (45 %ige wäßrige Dispersion) | | | | | | |

### Beispiel 5

Hier wurden die Ergebnisse, die mit einer erfindungsgemäßen Zusammensetzung erhalten wurden (Beispiel 5a), mit denen verglichen, die sich bei Verwendung nicht-erfindungsgemäßer Zusammensetzungen ergaben (Beispiel 5b, Beispiel 5c).
In Beispiel 5b wurde eine Zusammensetzung verwendet, die keinen Phosphorsäureester enthielt, in Beispiel 5c wurde ohne Verwendung einer Borverbindung gearbeitet. Die Schichtdicke der auf das Substrat aufgebrachten Zusammensetzung betrug in allen Fällen vor Trocknung 0,5 mm, Applikation, Trocknung und Brenntest wurden durchgeführt, wie in Beispiel 1 angegeben.

Die Ergebnisse zeigt Tabelle 6.

**Tabelle 6**

| **Beispiel:** | **Substrat, Flächengewicht in g/m**^{**2**} | **Beschichtungs-Zusammensetzung** | | | **Gewichtsverhältnis a : b : c** | **ND** | **EL** |
|---|---|---|---|---|---|---|---|
| | | **Komponente a)** | **Komponente b)** | **Komponente c)** | | | |
| 5a | PES, schwarz, 316 | BS | TXP | wie Beispiel 1 | 2 : 1 : 2 | 4 | 5 |
| 5b | PES, schwarz, 316 | BS | - | wie Beispiel 1 | 1 : 0 : 1 | * | * |
| 5c | PES, schwarz, 316 | - | TXP | wie Beispiel 1 | 0 : 1 : 2 | 0 | 15 |
| 5d | PA, 216 Rest wie 5a | | | | | 0 | 5 |
| 5e | PA, 216 Rest wie 5b | | | | | 2 | 15 |
| 5f | PA, 216 Rest wie 5c | | | | | 2 | 15 |
| 5g | CV/PES (60:40), 291 Rest wie 5a | | | | | 5 | 10 |
| 5h | CV/PES (60:40), 291 Rest wie 5b | | | | | 7 | 5 |
| 5i | CV/PES (60:40), 291 Rest wie 5c | | | | | * | * |
| 5j | CO/PES (35:65), 208 Rest wie 5a | | | | | 1 | 5 |
| 5k | CO/PES (35:65), 208 Rest wie 5b | | | | | 0 | 5 |
| 5l | CO/PES (35:65), 208 Rest wie 5c | | | | | 29 | 70 |
| 5m | CO/CV/PES (19:37:44), 327 Rest wie 5a | | | | | 1 | 5 |
| 5n | CO/CV/PES (19:37:44), 327 Rest wie 5b | | | | | 9 | 10 |
| 5o | CO/CV/PES (19:37:44), 327 Rest wie 5c | | | | | * | * |

In Tabelle 6 bedeutet ein * in den Spalten ND und EL, daß keine Werte angegeben werden können, weil die Probe vollständig verbrannte.

## Patentansprüche

1. Halogenfreie Zusammensetzung, welche mindestens folgende Komponenten enthält:
a) Borsäure oder ein Alkalimetallborat oder ein Ammoniumborat
b) einen wasserunlöslichen Triester der Phosphorsäure
c) eine wäßrige Dispersion eines wasserunlöslichen Polymeren

2. Zusammensetzung nach Anspruch 1, **dadurch gekennzeichnet, daß** Komponente b) eine Verbindung der Formel (RO)₃ P=O ist, worin alle Reste R unabhängig voneinander für einen unsubstituierten Phenylrest stehen oder für einen Phenylrest, der durch eine oder mehrere Hydroxygruppen oder Alkylgruppen mit 1 bis 4 Kohlenstoffatomen substituiert ist.

3. Zusammensetzung nach Anspruch 1 oder 2, **dadurch gekennzeichnet, daß** Komponente b) einen Schmelzpunkt von weniger als 100°C, vorzugsweise von weniger als 70°C besitzt.

4. Zusammensetzung nach einem oder mehreren der Ansprüche 1 bis 3, **dadurch gekennzeichnet, daß** das wasserunlösliche Polymer in Komponente c) ein Polyurethan ist oder ein Homo- oder Copolymer, das aus einem oder mehreren der folgenden Monomeren aufgebaut ist: Vinylacetat, Ethylen, Propylen, N-Methylolacrylamid, N-Methylolmethacrylamid, Acrylsäure, Methacrylsäure, Alkalimetallacrylat, Alkalimetallmethacrylat, Alkylester der Acrylsäure oder der Methacrylsäure mit 1 bis 4 Kohlenstoffatomen im Alkylrest.

5. Zusammensetzung nach einem oder mehreren der Ansprüche 1 bis 4, **dadurch gekennzeichnet, daß** das Polymer in Komponente c) ein Copolymer aus Vinylacetat und Ethylen ist oder ein Copolymer aus N-Methylolacrylamid und Ethylacrylat.

6. Zusammensetzung nach einem oder mehreren der Ansprüche 1 bis 5, **dadurch gekennzeichnet, daß** das Gewichtsverhältnis des in Komponente a) enthaltenen Bors zu dem in Komponente b) enthaltenen Phosphor 1: 0,05 bis 1: 0,1 beträgt.

7. Zusammensetzung nach einem oder mehreren der Ansprüche 1 bis 6, **dadurch gekennzeichnet, daß** Komponente c) 25 bis 65 Gew% Polymer, 30 bis 70 Gew% Wasser und 1 bis 5 Gew% Tensid enthält.

8. Zusammensetzung nach einem oder mehreren der Ansprüche 1 bis 7, **dadurch gekennzeichnet, daß** sie zusätzlich ein Antischaummittel (Komponente d)) und/oder ein Verdikkungsmittel (Komponente e)) enthält.

9. Zusammensetzung nach einem oder mehreren der Ansprüche 1 bis 8, **dadurch gekennzeichnet, daß** sie
25 bis 50 Gew% Komponente a)
10 bis 40 Gew% Komponente b)
20 bis 50 Gew% Komponente c)
0 bis 5 Gew% Komponente d)
0 bis 5 Gew% Komponente e)
enthält.

10. Verfahren zur Herstellung einer Zusammensetzung gemäß einem oder mehreren der Ansprüche 1 bis 9, **dadurch gekennzeichnet, daß** man zu einer wäßrigen Dispersion eines wasserunlöslichen Polymeren (Komponente c)) Borsäure oder ein Alkalimetallborat oder ein Ammoniumborat (Komponente a)) hinzufügt, die erhaltene Mischung homogenisiert, anschließend einen wasserunlöslichen Triester der Phosphorsäure (Komponente b)) und ggf. ein Antischaummittel (Komponente d)) und/oder ein Verdickungsmittel (Komponente e)) zugibt und die erhaltene Zusammensetzung homogenisiert.

11. Verwendung einer Zusammensetzung gemäß einem oder mehreren der Ansprüche 1 bis 9 zur Applikation auf ein flächenförmiges erstes Substrat.

12. Verwendung nach Anspruch 11, **dadurch gekennzeichnet, daß** das Substrat mit der Zusammensetzung beschichtet wird.

13. Verwendung nach Anspruch 11 oder 12, **dadurch gekennzeichnet, daß** nach dem Aufbringen der Zusammensetzung getrocknet wird, wobei eine solche Menge an der Zusammensetzung aufgebracht wird, daß die aus der Zusammensetzung stammende Schicht nach dem Trocknen ein Flächengewicht von 160 bis 350 g/m² besitzt, insbesondere 250 bis 300 g/m².

14. Verwendung nach einem oder mehreren der Ansprüche 11 bis 13, **dadurch gekennzeichnet, daß** man anschließend auf die dem ersten Substrat abgewandte Oberfläche der aus der Zusammensetzung stammenden Schicht ein zweites flächenförmiges Substrat aufbringt.

15. Verwendung nach einem oder mehreren der Ansprüche 11 bis 14, **dadurch gekennzeichnet, daß** das erste und/oder das zweite flächenförmige Substrat ein textiles Flächengebilde, eine Folie, ein Vlies oder eine Platte ist.

## Claims

1. A halogen-free composition, which comprises at least the following components:
a) boric acid or an alkali metal borate or an ammonium borate
b) a water-insoluble triester of phosphoric acid
c) an aqueous dispersion of a water-insoluble polymer.

2. A composition according to Claim 1, wherein component b) is a compound of the formula (RO)₃P=O, in which all of the radicals R, independently of one another, are an unsubstituted phenyl radical or a phenyl radical which has substitution by one or more hydroxy groups or alkyl groups having from 1 to 4 carbon atoms.

3. A composition according to Claim 1 or 2, wherein component b) has a melting point below 100°C, preferably below 70°C.

4. A composition according to one or more of Claims 1 to 3, wherein the water-insoluble polymer in component c) is a polyurethane or a homo- or copolymer which is composed of one or more of the following monomers: vinyl acetate, ethylene, propylene, N-methylolacrylamide, N-methylolmethacrylamide, acrylic acid, methacrylic acid, alkali metal acrylate, alkali metal methacrylate, alkyl ester of acrylic acid or of methacrylic acid having from 1 to 4 carbon atoms in the alkyl radical.

5. A composition according to one or more of Claims 1 to 4, wherein the polymer in component c) is a copolymer of vinyl acetate and ethylene or a copolymer of N-methylolacrylamide and ethyl acrylate.

6. A composition according to one or more of Claims 1 to 5, wherein the ratio by weight of the boron present in component a) to the phosphorus present in component b) is from 1:0.05 to 1:0.1.

7. A composition according to one or more of Claims 1 to 6, wherein component c) comprises from 25 to 65% by weight of polymer, from 30 to 70% by weight of water and from 1 to 5% by weight of surfactant.

8. A composition according to one or more of Claims 1 to 7, which also comprises an antifoam agent (component d)) and/or a thickener (component e)).

9. A composition according to one or more of Claims 1 to 8, which comprises
from 25 to 50% by weight of component a)
from 10 to 40% by weight of component b)
from 20 to 50% by weight of component c)
from 0 to 5% by weight of component d)
from 0 to 5% by weight of component e).

10. A process for preparing a composition according to one or more of Claims 1 to 9, which comprises adding, to an aqueous dispersion of a water-insoluble polymer (component c)), boric acid or an alkali metal borate or an ammonium borate (component a)), homogenizing the resultant mixture, then adding a water-insoluble triester of phosphoric acid (component b)) and, optionally, an antifoam agent (component d)) and/or a thickener (component e)) and homogenizing the resultant composition.

11. The use of a composition according to one or more of Claims 1 to 9 for application to a first sheet-like substrate.

12. The use according to Claim 11, wherein the substrate is coated with the composition.

13. The use according to Claim 11 or 12, wherein drying is carried out after the application of the composition, and the amount of the composition applied is such that the layer deriving from the composition has, after drying, a weight per unit surface area of from 160 to 350 g/m², in particular from 250 to 300 g/m².

14. The use according to one or more of Claims 11 to 13, wherein a second sheet-like substrate is subsequently applied to that surface of the layer deriving from the composition which faces away from the first substrate.

15. The use according to one or more of Claims 11 to 14, wherein the first and/or the second sheet-like substrate is a textile sheet-like structure, a film, a nonwoven, or a solid sheet.

## Revendications

1. Composition non halogénée qui contient au moins des composants suivants :
a) l'acide borique ou un borate de métaux alcalins ou un borate d'ammonium,
b) un triester de l'acide phosphorique insoluble dans l'eau,
c) une dispersion aqueuse d'un polymère insoluble dans l'eau.

2. Composition selon la revendication 1, **caractérisée en ce que** le composant b) est un composé de formule (RO)₃P=O, où tous les restes R indépendamment les uns des autres représentent un reste phényle non substitué ou un reste phényle qui est substitué par un ou plusieurs groupes hydroxyle ou alkyle présentant 1 à 4 atomes de carbone.

3. Composition selon la revendication 1 ou 2, **caractérisée en ce que** le composant b) présente un point de fusion inférieur à 100°C, de préférence inférieur à 70°C.

4. Composition selon une ou plusieurs des revendications 1 à 3, **caractérisée en ce que** le polymère insoluble dans l'eau dans le composant c) est un polyuréthanne ou un homo- ou copolymère constitué par un ou plusieurs des monomères suivants : acétate de vinyle, éthylène, propylène, N-méthylolacrylamide, N-méthylolméthacrylamide, acide acrylique, acide méthacrylique, acrylate de métaux alcalins, méthacrylate de métaux alcalins, ester d'alkyle de l'acide acrylique ou de l'acide méthacrylique présentant 1 à 4 atomes de carbone dans le fragment alkyle.

5. Composition selon une ou plusieurs des revendications 1 à 4, **caractérisée en ce que** le polymère dans le composant c) est un copolymère d'acétate de vinyle et d'éthylène, ou un copolymère de N-méthylolacrylamide et d'acrylate d'éthyle.

6. Composition selon une ou plusieurs des revendications 1 à 5, **caractérisée en ce que** le rapport en masse du bore contenu dans le composant a) au phosphore contenu dans le composant b) est de 1:0,05 à 1:0,1.

7. Composition selon une ou plusieurs des revendications 1 à 6, **caractérisée en ce que** le composant c) présente une teneur de 25 à 65 % en masse en polymère, de 30 à 70 % en masse en eau et de 1 à 5 % en masse en agent de surface.

8. Composition selon une ou plusieurs des revendications 1 à 7, **caractérisée en ce qu'**elle contient en plus un agent anti-mousse (composant d)) et/ou un agent épaississant (composant e)).

9. Composition selon une ou plusieurs des revendications 1 à 8, **caractérisée en ce qu'**elle renferme
de 25 à 50 % en masse de composant a)
de 10 à 40 % en masse de composant b)
de 20 à 50 % en masse de composant c)
de 0 à 5 % en masse de composant d)
de 0 à 5 % en masse de composant e).

10. Procédé pour la préparation d'une composition selon une ou plusieurs des revendications 1 à 9, **caractérisé en ce qu'**on ajoute à une dispersion aqueuse d'un polymère insoluble dans l'eau (composant c)) l'acide borique ou un borate de métaux alcalins ou un borate d'ammonium (composant a)), on homogénéise le mélange obtenu, ensuite on ajoute un triester de l'acide phosphorique insoluble dans l'eau (composant b)) et éventuellement un agent anti-mousse (composant d)) et/ou un agent épaississant (composant e)) et on homogénéise la composition obtenue.

11. Utilisation d'une composition selon une ou plusieurs des revendications 1 à 9 pour l'application à un premier substrat planiforme.

12. Utilisation selon la revendication 11, **caractérisée en ce que** le substrat est revêtu de la composition.

13. Utilisation selon la revendication 11 ou 12, **caractérisée en ce qu'**on effectue un séchage après l'application de la composition, la quantité appliquée de la composition telle que la couche de la composition obtenue après séchage étant telle qu'elle possède une masse surfacique de 160 à 350 g/m², en particulier de 250 à 300 g/cm².

14. Utilisation selon une ou plusieurs des revendications 11 à 13, **caractérisée en ce que**, ensuite, on applique un second substrat planiforme à la surface de la couche résultante de la composition non tournée vers le premier substrat.

15. Utilisation selon une ou plusieurs des revendications 11 à 14, **caractérisée en ce que** le premier et/ou le second substrat planiforme est un produit textile bidimensionnel, une feuille, un voile ou une plaque.
